**Europäisches Patentamt**

**European Patent Office**

**Office européen des brevets**

(19)

(11) Veröffentlichungsnummer: **0 310 684**
**A1**

(12)

# EUROPÄISCHE PATENTANMELDUNG
Veröffentlicht nach Art. 158 Abs. 3 EPÜ

(21) Anmeldenummer: **88907180.9**

(51) Int. Cl.³: **A 47 J 42/30**

(22) Anmeldetag: **17.12.87**

Daten der zugrundeliegenden internationalen Anmeldung:

(86) Internationale Anmeldenummer:
**PCT/SU87/00148**

(87) Internationale Veröffentlichungsnummer:
**WO88/06858 (22.09.88 88/21)**

(30) Priorität: **19.03.87 SU 4211531**

(43) Veröffentlichungstag der Anmeldung:
**12.04.89 Patentblatt 89/15**

(84) Benannte Vertragsstaaten:
**DE FR GB IT**

(71) Anmelder: **LVOVSKOE TSENTRALNOE
KONSTRUKTORSKO-TEKHNOLOGICHESKOE BJURO
KIEVSKOGO NAUCHNO-PROIZVODSTVENNOGO
OBIEDINENIA 'ELEKTROBYTPRIBOR'
ul. Kvitova 12
Lvov, 290019(SU)**

(72) Erfinder: **POLYAKOV, Vladimir Alexandrovich
ul. Vyshenskogo, 13-4
Lvov, 290010(SU)**

(72) Erfinder: **CHMYR, Roman Ivanovich
ul. Ivana Franko, 23-31
Lvov, 290005(SU)**

(72) Erfinder: **LAVROV, Anatoly Fedorovich
ul. Kovpaka, 19-82
Lvov, 290068(SU)**

(72) Erfinder: **Strezova, Ljudmila Kristovna
pr. Pobedy, 31-35
Lvov, 290054(SU)**

(74) Vertreter: **Patentanwälte Zellentin & Partner
Zweibrückenstrasse 15
D-8000 München 2(DE)**

(54) **KAFFEEMÜHLE.**

(57) Das Gerät enthält einen senkrechten zylindrischen Mahlbecher (7), innerhalb dessen ein Begrenzer (11) seines Mahlraumes untergebracht ist, der als Rotationskörper veränderlichen Querschnitts ausgebildet ist, welcher senkrechte Rippen (12) besitzt, die längs der Tangente an die Erzeugende des Rotationskörpers verlaufen. Die untere Grundfläche des Kegels des Trichters (6), der den Mahlbecher (7) mit dem Einfüllbunker (2) verbindet, ist in unmittelbarer Nähe zu den oberen Kanten der Rippen (12) des Mahlraumbegrenzers (11) angeordnet.

FIG.1

EP 0 310 684 A1

# KAFFEEMÜHLE

## Gebiet der Technik

Die Erfindung bezieht sich auf Elektrohaushaltsgeräte zum Mahlen verschiedener Trockengüter wie Kaffeebohnen, Grützen, Zucker, Zwiebäcke, Erbsen und betrifft insbesondere Kaffeemühlen.

## Stand der Technik

Breit bekannt ist eine elektrische Kaffeemühle, die im oberen Teil ihres Gehäuses einen asymmetrisch eingebauten Antriebsmotor und im unteren Teil einen Boden in Form eines Trichters aufweist. Exzentrisch zum Antriebsmotor ist am Umfang des Gehäuses eine Einfüllrinne ausgeführt, die im Trichter des Bodens mündet. Am Trichter ist unten/ein zylindrischer Mahlbecher mit einer perforierten Wandung befestigt, der innerhalb eines Aufnahmeraums untergebracht ist. Auf der Motorwelle/sitzt ein Plattenmesser mit auf- und abwärts abgebogenen Enden.

Diese Kaffeemühle weist jedoch ein ungenügendes Mahlvermögen auf. Das Mahlvermögen für Kaffeemühlen mit perforierter Wandung des Mahlbechers wird durch den Prozentanteil des Zermahlens und des Austritts des gemahlenen Pulvers durch die Perforationen des Mahlbechers in den Aufnahmebehälter im Verhältnis zur Aufgabemenge des Mahlguts bestimmt.

Das maximale Mahlvermögen ist in der betreffenden Kaffeemühle nicht zu erreichen, weil ein Teil ungemahlener Teilchen innerhalb des Mahlbechers zurückbleibt. Dies rührt davon her, daß die Körner sich während des Mahlvorganges im freien Raum des Mahlbechers bewegen. Folglich ist die Anzahl der Zusammenstöße des Schlagmessers mit jedem der Körner nicht optimal, und nur ein Teil der in den Mahlbecher eingefüllter Körner wird zu Pulver gemahlen. Außerdem wird ein gewisser Anteil der Körner während des Mahlvorganges, insbesondere gegen dessen Ende, in die Einfüllrinne geschleudert und kommt nach dem Anhalten des Motors in den Mahlbecher zurück.

Es ist auch eine Kaffeemühle bekannt (SU,A,1159551), die einen Einfüllraum mit Deckel und einen senkrechten zylindrischen Becher zum Mahlen von Kaffeebohnen mit einer perforierten Seitenwandung enthält. Zum Verbinden des Mahlbechers mit dem Einfüllbunker ist ein Trichter vorhanden. Innerhalb des Mahlbechers ist ein Schlagmesser auf der Antriebswelle montiert. Über dem Schlagmesser ist ein Mahlraumbegrenzer für den Mahlbecher gleichachsig mit der Antriebswelle derart festeingebaut, daß zwischen ihm, der Welle und dem Schlagmesser Zwischenräume gebildet sind. Der Mahlraumbegrenzer ist in Form eines Rotationskörpers veränderlichen Querschnitts ausgebildet, der mit der kleineren Grundfläche nach oben zugewandt ist (Kegel oder konkaver Paraboloid). Unten am Gehäuse der Kaffeemühle ist ein Aufnahmebehälter für gemahlenen Kaffee angebracht. Jedoch ist auch bei dieser Kaffeemühle ein ungenügendes Mahlvermögen zu bemängeln, welches durch einen niedrigen Prozentanteil des durch die Perforationen hinausgeführten gemahlenen Pulvers bedingt ist. Dieser Prozent/anteil ergibt sich aus dem Verhältnis zwischen der in den Aufnahmebehälter ausgetragenen Pulvermenge und der in den Mahlbecher eingefüllten Mahlgutmenge. Ein optimaler Ausnutzungsgrad für eine solche Kaffeemühle ist ein 100 %-nahes Mahlvermögen. Es muß aber gesagt werden, daß die Erzielung eines solchen Mahlvermögens praktisch unmöglich ist, da bei dieser Konstruktion der Kaffeemühle die Rückgabe/ eines bestimmten Anteils des Mahlgutes während des Mahlvorganges in den Einfüllraum nicht zu gewährleisten ist. Dies liegt an den offenen Kanälen, die den Einfüllraum mit dem Mahlbecher verbinden.

Ein weiterer Nachteil der Konstruktion der bekannten Kaffeemühle ist ihre ungenügende Mahlleistung. Die Mahlleistung wird in diesem Fall durch die Zeit bestimmt, in der eine eingefüllte Mahlgutmenge gemahlen und aus dem Mahlbecher in den Aufnahmebehälter hinausgeführt werden kann, d.h. sie wird durch den Menge/Zeit-Quotienten bestimmt.

Die Mahlleistung läßt sich nicht steigern, weil während des Mahlvorganges, nachdem das rotierende Schlagmesser die maximale Umlaufzahl erreicht hat und die primäre Spaltung der Körner geschehen ist, ein Zeitpunkt eintritt, wo sich die gesamte Mahlgutmenge gemeinsam mit dem Schlagmesser in gleicher Richtung umdreht, d.h. die linearen Geschwindigkeiten des Schlagmessers und der zu mahlenden Teilchen nach ein und derselben Seite gerichtet sind, die relative Geschwindigkeit minimal ist, so daß sich das Schlagmesser in einem Betriebszustand des Nacheilens hinter den Teilchen befindet und sich der Mahlvorgang verlangsamt. Dabei ergibt sich die relative Geschwindigkeit des Schlagmessers und der Teilchen als die algebraische Differenz der Geschwindigkeiten: $\overline{V}_{rel.} = \overline{V}_{Messer} - \overline{V}_{Teilchen}$.

Offenbarung der Erfindung

Ziel der Erfindung ist die Beseitigung der obenbeschriebenen Nachteile bei den bekannten Kaffeemühlenausführungen.

Der Erfindung liegt die Aufgabe zugrunde, eine derartige Konstruktion der Kaffeemühle zu schaffen, mit der das Mahlvermögen und die Mahlintensität gesteigert und die funktionellen Möglichkeiten der Kaffeemühle im ganzen erweitert werden können.

Diese Aufgabe wird dadurch gelöst, daß bei einer Kaffeemühle, enthaltend einen Einfüllraum mit einem Deckel, einen senkrechten zylindrischen Mahlbecher mit einer perforierten Seitenwandung, einen Trichter zum Verbinden des Mahlbechers mit dem Einfüllbunker, einen als Rotationskörper veränderlichen Querschnitts ausgebildeten und auf der Antriebswelle innerhalb des Mahlbechers angeordneten Mahlraumbegrenzer des Mahlbechers sowie ein am Ende der Antriebswelle sitzendes Schlagmesser, erfindungsgemäß der Mahlraumbegrenzer mit senkrechten Rippen versehen ist, welche längs der Tangente an seine Erzeugende verlaufen, und daß die untere Grundfläche des Trichterkegels in unmittelbarer Nähe zu den oberen Kanten der Rippen des Mahlraumbegrenzers angeordnet ist.

Eine derartige bauliche Gestaltung des Geräts gestattet es, das gemahlene Pulver aus dem Mahlbecher praktisch vollständig hinauszuführen, wodurch sich die Mahlleistung der Kaffeemühle erhöht.

Das Wesen der Erfindung besteht im folgenden.

Der Trichter ist mit seiner oberen Grundfläche mit dem Einfüllraum verbunden und stellt ein Zwischenglied zwischen dem Einfüllraum und dem Mahlbecher dar, dabei ist der Trichter mit seiner unteren Grundfläche des Kegels in unmittelbarer Nähe zu den oberen Kanten der Rippen des Mahlraumbegrenzers angeordnet. Es bleibt also ein minimal notwendiger Ringspalt bestehen, der das einzufüllende Mahlgut in den Mahlbecher eintreten läßt. Infolge dessen ist es praktisch unmöglich, daß ein gewisser Anteil des Mahlproduktes während der Mahlung in den Einfüllbunker zurückgeschleudert werden kann; die gesamte eingefüllte Mahlgutmenge bleibt somit während des ganzen Mahlvorganges innerhalb des Mahlbechers zurück, wodurch die Mahlung am vollständigsten erfolgt und das Mahlvermögen wächst.

Andererseits wird durch die Anordnung der senkrechten Rippen des Mahlraumbegrenzers längs der Tangente an seine Erzeugende dazu beigetragen, daß das gemahlene Pulver aus dem Mahlbecher in den Aufnahmebehälter am vollständigsten hinausgeführt werden kann. Mit einer solchen Anordnung der Rippen entsteht innerhalb des Mahlbechers eine optimale aktive Zone. Die aktive Zone im Mahlbecher ist durch die Flächen des Mahlraumbegrenzers dieses Mahlbechers, seine senkrechte perforierte Seitenwandung und den Trichter gebildet. Dank den senkrechten Rippen in der aktiven Zone wird das Umdrehen des Mahlgutes mit dem rotierenden Schlagmesser verhindert, wodurch die relative Geschwindigkeit der Mahlgutteilchen und des Schlagmessers gegeneinander steigt. In diesem Fall liegt die geometrische Addition der Geschwindigkeiten vor, d.h.:

$$\overline{V}_{rel.} = \overline{V}_{Messer} + \overline{V}_{Mahlgut}$$

Außerdem wird durch die Anordnung der Rippen längs der Tangente an die Erzeugende des Mahlraumbegrenzers die Laufbahn der Mahlgutteilchen und folglich deren Geschwindigkeitsrichtung verändert. Nach dem Zusammenstoß mit den Rippen wird die Geschwindigkeit der Mahlgutteilchen längs der Rippen zum Umfang hin gerichtet. Gerade diesem Umstand ist es im wesentlichen zu verdanken, daß das gemahlene Pulver durch die Perforationen des Mahlbechers praktisch vollständig in den Aufnahmebehälter abgeführt werden kann.

Untersuchungen haben gezeigt, daß bei der erfindungsgemäß vorgeschlagenen Ausführung der Kaffeemühle das

- 5 -

Mahlvermögen im Prinzip von 95 % auf 100 % gestiegen ist. Dabei wurde die Mahlleistung von 1 g/s auf 1,5 g/s erhöht.

Beschreibung

Nachstehend wird ein konkretes Ausführungsbeispiel einer Kaffeemühle unter Bezugnahme auf Zeichnungen beschrieben. Es zeigt:

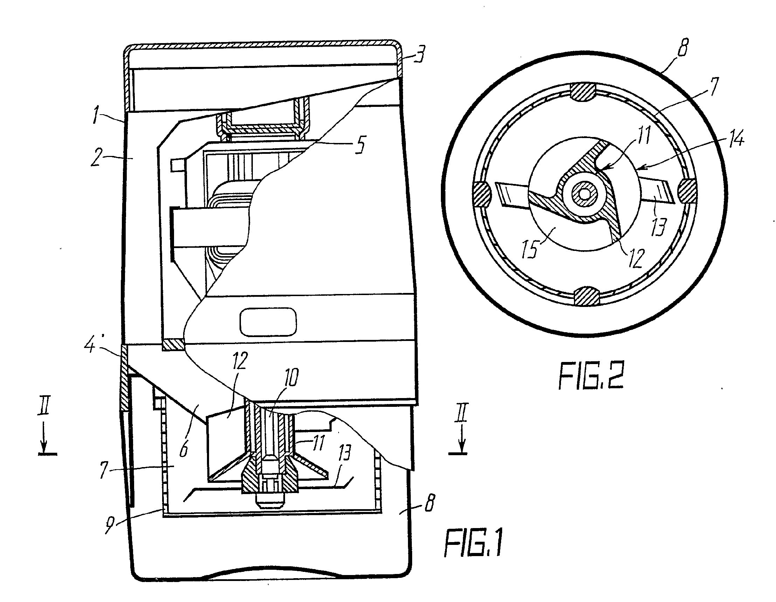

Fig. 1 die Gesamtansichteiner Kaffeemühle mit teilweisem Schnitt;

Fig. 2 den Schnitt nach Linie II-II der Fig. 1

Ausführungsvariante der Erfindung

Die erfindungsgemäß ausgeführte Kaffeemühle enthält ein Gehäuse 1 mit einem Einfüllraum 2 und einem Deckel 3. Innerhalb des Gehäuses 1 ist auf einem Boden 4 ein elektrischer Antriebsmotor 5 aufgestellt. Im Hohlraum des Bodens 4 ist ein Trichter 6 angeordnet, der den Einfüllraum 2 mit einem im Hohlraum eines Aufnahmebehälters 8 untergebrachten Mahlbecher 7 zum Mahlen von Kaffeebohnen verbindet. Der Aufnahmebehälter 8 ist am Boden 4 befestigt und abnehmbar ausgeführt. Der Mahlbecher 7 weist eine zylindrische Form auf und ist senkrecht angeordnet. Mindestens teilweise ist die Seitenwandung 9 perforiert. Auf der Verlängerung einer Antriebswelle des Antriebsmotors 5 ist ein Mahlraumbegrenzer 11 des Mahlbechers 7 fest montiert. Der Mahlraumbegrenzer 11 ist als kegelförmiger Rotationskörper veränderlichen Querschnitts mit senkrechten Rippen 12 (Außenumfang) des Rotationskörpers ausgebildet, die längs der Tangente zur Erzeugenden/ verlaufen. Die Rippen 12 besitzen Vorsprünge (nicht angedeutet), mit denen sie am Trichter 6 befestigt werden. An den letzteren ist mittels ähnlicher Vorsprünge der Mahlbecher 7 zum Mahlen von Kaffeebohnen angebracht.

Die Kaffeemühle ist mit einem Satz auswechselbarer Mahlbecher 7 bestückt, deren jeder mit Netzen verschiedener Maschenweiten bewehrt ist. Am Ende der Antriebswelle 10 ist ein abnehmbares Schlagmesser 13 angebracht, dessen Form und Anzahl abgebogener Schneiden im Zusammenhang mit der Erfindung/auf den Mahlvorgang keinen Einfluß haben. Zwischen dem Mahlraumbegrenzer 11 des Mahlbechers 7 und der unteren Grundfläche des Kegels des Trichters 6 ist ein Ringspalt 14 gebildet, der von den Rippen 12 durchquert ist. Die Kanten der Rippen 12 des Mahlraumbegrenzers 11 bilden zusammen mit der unteren Grundfläche des Kegels des Trichters 6 Durchgänge 15 für Kaffeebohnen.

Das Elektrohaushaltsgerät, die Kaffeemühle, arbeitet folgenderweise.

Zur Vorbereitung der Kaffeemühle für den Mahlbetrieb wird der Aufnahmebehälter 8 abgenommen und an den Trichter 6 der Mahlbecher 7 mit einem Sieb, dessen Maschenweite der erforderlichen Mahlfeinheit entspricht, angeschlossen. Danach wird der Aufnahmebehälter 8 am Boden 4 befestigt. Es wird der Deckel 3 abgehoben und in den Einfüllraum 2 das zu mahlende Gut aufgegeben, das durch den Trichter 6 gleitend über die Durchgänge 15 des Ringspaltes 14 in den Mahlbecher 7 gelangt. Der Deckel 3 wird wieder aufgesetzt. Das Gerät wird ans Versorgungsnetz angeschlossen. Es wird das eingefüllte Produkt gemahlen. Die gemahlenen Teilchen werden im Gleiten längs der Rippen 12 vom Schlagmesser 13 auf die perforierte Seitenwandung 9 des Mahlbechers 7 geschleudert und werden durch das Sieb hindurch in den Aufnahmebehälter 8 ausgeschüttet.

Nach Abschluß der Mahlung einer erforderlichen Produktmenge wird das Gerät vom Versorgungsnetz abgeschaltet, der Aufnahmebehälter 8 vom Boden 4 der Kaffeemühle abgenommen und das gemahlene Pulver entnommen. Danach wird der Aufnahmebehälter 8 wieder auf seinen Platz aufgesetzt, und in den Einfüllraum 2 eine neue Portion Kaffeebohnen aufgegeben, um den Zyklus zu wiederholen.

Sollte es erforderlich sein, ein anderes Produkt zu mahlen, muß das Gerät einer hygienischen Naßreinigung unterworfen werden. Dazu werden der Aufnahmebehälter, der Mahlbecher, der Mahlraumbegrenzer des Mahlbechers sowie das Schlagmesser abgenommen.

Es ist zweckmäßig, diese Bauteile leicht abnehmbar, beispielsweise mit "Bajonettverbindung", auszuführen.

Die Kaffeemühle läßt sich mit gleich hoher Qualität und Intensität sowohl zum Mahlen von Kaffeebohnen als auch zum Zerkleinern verschiedener Grützen, Zucker, Zwiebäcke, Erbsen und anderer Trockenprodukte einsetzen.

<u>Industrielle Anwendbarkeit</u>

Die vorliegende Erfindung läßt sich wirkungsvoll als Trockenprodukte mahlendes Elektrohaushaltsgerät verwenden. Die Erfindung ermöglicht die Mahlung eines Pulvers mit mehreren Dispersionsgradwerten sowie einen besseren Bedienungskomfort durch Einsatz leicht abnehmbarer Verbindungen im Gerät.

PATENTANSPRUCH

Kaffeemühle, enthaltend einen Einfüllraum (2) mit einem Deckel (3), einen senkrechten zylindrischen Mahlbecher (7) mit einer perforierten Seitenwandung (9), einen Trichter (6) zum Verbinden des Mahlbechers (7) mit dem Einfüllraum (2), einen als Rotationskörper veränderlichen Querschnitts ausgebildeten und auf einer Antriebswelle (10) innerhalb des Mahlbechers (7) angeordneten Mahlraumbegrenzer (11) des Mahlbechers (7) sowie ein am Ende der Antriebswelle (10) sitzendes Schlagmesser (13), dadurch g e k e n n z e i c h n e t , daß der Mahlraumbegrenzer (11) mit senkrechten Rippen (12) versehen ist, welche längs der Tangente an seine Erzeugende verlaufen, und daß die untere Grundfläche des Kegels des Trichters (6) in unmittelbarer Nähe der oberen Kanten der Rippen (12) des Mahlraumbegrenzers (11) angeordnet ist.

FIG.1

FIG.2

031 0684

## I. CLASSIFICATION OF SUBJECT MATTER (if several classification symbols apply, indicate all)

According to International Patent Classification (IPC) or to both National Classification and IPC

IPC$^4$ - A 47 J 42/30

## II. FIELDS SEARCHED

### Minimum Documentation Searched [7]

| Classification System | Classification Symbols |
|---|---|
| IPC$^4$ | A 47 J 42/00, 42/22, 42/24, 42/26, 42/30 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | DE,B2,2256348,(Etud S.A.Dijon)18 November 1976(18.11.76),see figure 2 | 1 |
| A | FR,A1,2170837(MOULINEX S.A.)21 September 1973 (21.09.73),see figure 1 | 1 |
| A | SU,A1,1159551(Kievsky filial Vsesojuznogo nauchno-issledovatelskogo instituta tekhni-cheskoi estetiki et al.)07 June 1985 (07.06.85)see the abstract (cited in the description) | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 24 April 1988(24.04.88) | 25 May 1988(25.05.88) |
| International Searching Authority | Signature of Authorized Officer |
| ISA/SU | |

Form PCT/ISA/210 (second sheet) (January 1985)